# EUROPÄISCHE PATENTSCHRIFT

(11) **EP 2 786 901 B1**
(45) Veröffentlichungstag und Bekanntmachung des Hinweises auf die Patenterteilung: **18.05.2016**
(21) Anmeldenummer: 13162279.7
(22) Anmeldetag: 04.04.2013
(51) Int. Cl.: B60R 1/12, B60Q 1/26, F21S 8/10

(54) **Elektronikeinrichtung, Trägermodul und Rückblickvorrichtung**
Electronic device, support module and rear view device
Dispositif électronique, module de support et dispositif de rétroviseur

(43) Veröffentlichungstag der Anmeldung: 08.10.2014
(73) Patentinhaber: SMR Patents S.à.r.l., 1653 Luxembourg (LU)
(72) Erfinder: Wieczorek, Romeo, 73732 Esslingen (DE)
(74) Vertreter: Weber-Bruls, Dorothée

(56) Entgegenhaltungen:
- EP-A1- 2 051 267
- EP-A2- 1 097 848
- CN-Y- 200 980 227
- DE-A1-102007 007 250
- DE-A1-102008 060 444
- DE-A1-102009 009 187
- DE-U1-202012 005 908
- KR-A- 20100 032 980

## Beschreibung

Die Erfindung betrifft eine Elektronikeinrichtung für eine Rückblickvorrichtung eines Kraftfahrzeugs, mit mindestens einer Verbraucherträgereinheit, die an einer Aufnahme einer Trägerplatte eines Trägermoduls anordenbar oder angeordnet ist, mit mindestens einem an der Verbraucherträgereinheit festlegbaren oder festgelegten elektrischen Verbraucher, mit mindestens einem Anschlussmittel, durch das die Verbraucherträgereinheit mit einer Spannungsquelle verbindbar oder verbunden ist, und mit mindestens einem elektrischen Widerstandsmittel, durch das eine Spannung und/oder Stromstärke am elektrischen Verbraucher einstellbar ist. Darüber hinaus betrifft die Erfindung ein Trägermodul mit einer Trägerplatte, einer Aufnahme und mit einer derartigen Elektronikeinrichtung sowie eine Rückblickvorrichtung eines Kraftfahrzeugs mit einem derartigen Trägermodul und/oder mit einer derartigen Elektronikeinrichtung.

Der Einsatz von Elektronikeinrichtungen in Rückblickvorrichtungen von Kraftfahrzeugen ist bekannt. Neben der Verwendung von Widerholblinkleuchten oder Beleuchtungseinrichtungen, können bekannte Elektronikeinrichtungen Warnanzeigen sowie Sensoren umfassen.

Wenn die Elektronikeinrichtung beispielsweise eine Licht emittierende Dioden (LED) umfasst, ist die Lichtausbeute abhängig von der Umgebungstemperatur der LED. Bei steigender Temperatur wird die Lichtausbeute der LED geringer. Bei den bekannten Elektronikeinrichtungen hat es sich als nachteilig erwiesen, dass die Verbraucherträgereinheit, der elektrische Verbraucher und das Widerstandsmittel in unmittelbarer Nähe zueinander an einer Trägerplatte eines Trägermoduls verbaut werden, wodurch die bei Betrieb entstehende Wärme zu einer Erhöhung der Temperatur in unmittelbarer Umgebung des elektrischen Verbrauchers führt und zu einen Leistungsabfall des Verbrauchers führt.

Um die Temperatur in unmittelbarer Umgebung des elektrischen Verbrauchers gering zu halten, wird in DE 10 2007 007 250 A1 eine Anordnung einer Elektronikvorrichtung vorgeschlagen, bei der das Widerstandsmittel zum elektrischen Verbraucher beabstandet und entstehende Wärme als Heizelement an eine Spiegelfläche der Rückblickvorrichtung abgibt. Ein derartiger Aufbau erweist sich als aufwendig.

Aus DE 10 2008 060 444 A1 ist ein nicht gattungsgemäßes Frontlichsystem bekannt, bei dem eine Lichtquelle über ein Wärmeleitelement mit einer Wärmesenke verbunden ist.

Aufgabe der Erfindung ist, eine Elektronikeinrichtung vorzuschlagen, die einfach baut und bei der die dem elektrischen Verbraucher zuführbare Wärme reduzierbar ist.

Diese Aufgabe wird durch eine eingangs genannte Elektronikeinrichtung erfindungsgemäß dadurch gelöst, dass das Widerstandsmittel eine Mehrzahl an Kohlenstoffnanoröhren umfasst sowie, dass das Anschlussmittel zumindest bereichsweise das Widerstandsmittel umfasst..

Bei Kohlenstoffnanoröhren handelt es sich um mikroskopisch kleine röhrenförmige Gebilde aus Kohlenstoff. Deren Wände bestehen aus Kohlenstoff, wobei die Kohlenstoffatome eine wabenartige Struktur aufweisen. Der Durchmesser von Kohlenstoffnanoröhren liegt im Bereich von 1 bis 50 nm. Die Mehrzahl an Kohlenstoffnanoröhren bilden ein Röhrenbündel. Hierbei können die Kohlenstoffnanoröhren ein- oder mehrwandig und/oder offen oder geschlossen ausgebildet sein. Grundsätzlich ist es denkbar, dass die Kohlenstoffnanoröhren in ihrem Inneren hohl sind. Darüber hinaus können die Kohlenstoffnanoröhren auch mit Silber, flüssigem Blei oder Edelgas gefüllt sein.

Die Verbraucherträgereinheit kann eine Platine umfassen. Darüber kann die Verbraucherträgereinheit einen Körper mit Laser-Direkt-Strukturierung (LDS) oder einen heißgeprägten Körper umfassen.

Dadurch, dass das Widerstandsmittel eine Mehrzahl an Kohlenstoffnanoröhren umfasst, kann die bei Betrieb der Elektronikeinrichtung entstehende Wärme des Widerstandsmittels gut an die Umgebung abgegeben werden. Darüber hinaus sind die Kohlenstoffnanoröhren auf einfache Weise in beziehungsweise an der Elektronikeinrichtung anordenbar.

Grundsätzlich ist es denkbar, dass ausschließlich das Widerstandsmittel Kohlenstoffnanoröhren umfasst. Darüber hinaus ist es denkbar, dass das Anschlussmittel und das Widerstandsmittel voneinander separierbare Bauteile umfassen. Ferner kann das mindestens eine Anschlussmittel zumindest abschnittsweise eine Mehrzahl an Kohlenstoffnanoröhren umfassen.

Um die Wärme, die bei Betrieb der Elektronikeinrichtung durch das Widerstandsmittel entsteht, gering zu halten, erweist es sich als vorteilhaft, wenn das mindestens eine Widerstandsmittel zur Verbraucherträgereinheit beabstandet ist, insbesondere wenn das mindestens eine Widerstandsmittel auf einer der Verbraucherträgereinheit abgewandten Seite der Aufnahme der Trägerplatte anordenbar oder angeordnet ist.

Das Widerstandsmittel und das Anschlussmittel können eine beliebige Form umfassen. Beispielsweise können sie aus einem Draht gebildet sein. Bei einer Ausführungsform ist vorgesehen, dass das Widerstandsmittel und/oder das Anschlussmittel bandförmig ausgebildet ist bzw. sind und insbesondere eine Breite zwischen 1 mm und 50 mm, insbesondere 5 mm und 50 mm, insbesondere zwischen 10 mm und 40 mm, insbesondere zwischen 15 mm und 30 mm, umfasst und/oder dass das Widerstandsmittel und/oder das Anschlussmittel eine Höhe von 0,1 mm und 5 mm aufweisen.

Darüber hinaus erweist es sich als vorteilhaft, wenn das Widerstandsmittel und/oder das Anschlussmittel eine Beschichtung der Trägerplatte des Trägermoduls bilden, insbesondere auf die Trägerplatte des Trägermoduls aufspritzbar, insbesondere durch ein 2-Komponentenverfahren, aufklebbar, aufsprühbar und/oder aufstreichbar ist bzw. sind. Solchenfalls kann die Einheit aus Trägermodul und Elektronikeinrichtung kompakt und einfach ausgebildet werden.

Ferner erweist es sich als vorteilhaft, wenn das Widerstandsmittel einen Widerstandswert zwischen 50 Ohm und 600 Ohm, insbesondere zwischen 50 Ohm und 500 Ohm, insbesondere zwischen 50 Ohm und 400 Ohm, insbesondere zwischen 50 Ohm und 300 Ohm, insbesondere zwischen 50 Ohm und 200 Ohm umfasst.

Der mindestens eine elektrische Verbraucher kann ein beliebiges elektrisches Gerät umfassen, beispielsweise einen Display, einen akustischen Signalgeber oder dergleichen. Bei einer Ausführungsform der Elektronikeinrichtung umfasst der mindestens eine elektrische Verbraucher ein Leuchtmittel, insbesondere eine LED oder OLED, und/oder ein Sensormittel.

Ferner kann das Widerstandsmittel ein erstes Widerstandselement umfassen, das mit dem elektrischen Verbraucher in Reihe schaltbar oder geschaltet ist, und/oder ferner kann das Widerstandsmittel ein zweites Widerstandselement umfassen, das mit dem elektrischen Verbraucher parallel schaltbar oder geschaltet ist.

Das zweite Widerstandselement bildet solchenfalls einen Hilfswiderstand.

Um die Gefahr einer Beschädigung der Elektronikeinrichtung zumindest zu reduzieren, erweist es sich als vorteilhaft, wenn die Elektronikeinrichtung mit mindestens eine der Verbraucherträgereinheit und/oder dem elektrischen Verbraucher funktional zugeordnete elektronische magnetische Schutzkomponente umfasst. Hierdurch ist die Lebensdauer der Elektronikeinrichtung erhöht.

Weiter erweist es sich als vorteilhaft, wenn das Anschlussmittel mindestens einen Plus-Anschluss und mindestens einen Minus-Anschluss umfasst.

Plus-Anschluss und/oder Minus-Anschluss können grundsätzlich beliebig zueinander erstreckt verlaufend angeordnet sein. Die Elektronikeinheit lässt sich jedoch kompakt ausgestalten, wenn der Plus-Anschluss und der Minus-Anschluss im wesentlichen parallel zueinander erstreckt verlaufend angeordnet sind.

Darüber hinaus wird die Aufgabe durch ein eingangs genanntes Trägermodul erfindungsgemäß dadurch gelöst, dass das Widerstandsmittel eine Mehrzahl an Kohlenstoffnanoröhren umfasst.

In Weiterbildung letztgenannten Ausführungsbeispiels erweist es sich als vorteilhaft, wenn die Trägerplatte mindestens eine Vertiefung umfasst, in der das mindestens eine Widerstandsmittel und/oder das mindestens eine Anschlussmittel anordenbar oder angeordnet ist. Hierdurch lassen sich Trägermodul und Elektronikeinrichtung kompakt ausbilden.

Ferner erweist es sich als vorteilhaft, wenn die Trägerplatte und die Aufnahme ein einstückiges Bauteil umfassen und/oder dass die Aufnahme eine gehäuseartige Vertiefung in der Trägerplatte umfasst.

Schließlich wird die Aufgabe gelöst durch eine Rückblickvorrichtung eines Kraftfahrzeugs mit mindestens einem Trägermodul, insbesondere mit mindestens einem der zuvor genannten Merkmale, und/oder mit mindestens einer Elektronikeinrichtung, insbesondere mit mindestens einem der zuvor genannten Merkmale.

Die erfindungsgemäße Elektronikeinrichtung, das erfindungsgemäße Trägermodul und die erfindungsgemäße Rückblickvorrichtung erweisen sich in mehrfacher Hinsicht als vorteilhaft:
Dadurch, dass das mindestens eine Widerstandsmittel eine Mehrzahl an Kohlenstoffnanoröhren umfasst, kann die durch das Widerstandsmittel erzeugte Wärme bei Betrieb der Elektronikeinrichtung einfach abtransportiert und an die Umgebung abgegeben werden.
Hierdurch ist die Gefahr eines Wärmestaus reduziert und die Temperatur in unmittelbarer Nähe des elektrischen Verbrauchers gering gehalten, wodurch die Gefahr von Leistungseinbußen des elektrischen Verbrauchers reduziert ist.

Dadurch, dass das mindestens eine Widerstandsmittel zum elektrischen Verbraucher beabstandet ist und insbesondere auf einer dem elektrischen Verbraucher abgewandten Seite der Aufnahme der Trägerplatte angeordnet ist, wirkt die Aufnahme zusätzlich wärmeisolierend, wodurch ein Anstieg der Temperatur in unmittelbarer Nähe des elektrischen Verbrauchers weiter reduziert ist.

Weitere Merkmale Weitere Merkmale, Einzelheiten sowie Vorteile der Erfindung ergeben sich aus den beigefügten Patentansprüche, aus den zeichnerischen Darstellungen und nachfolgender Beschreibung einer bevorzugten Ausführungsform einer erfindungsgemäßen Elektronikeinrichtung.

In der Zeichnung zeigt:
- Figur 1:: eine schematische Rückansicht auf ein erstes Ausführungsbeispiel des Trägermoduls mit Elektronikeinrichtung;
- Figur 2:: eine schematische Rückansicht eines zweiten Ausführungsbeispiels des Trägermoduls mit Elektronikeinrichtung; und
- Figur 3:: ein Ersatzschaltbild der Ausführungsbeispiele des Trägermoduls gemäß Figur 1 und Figur 2.

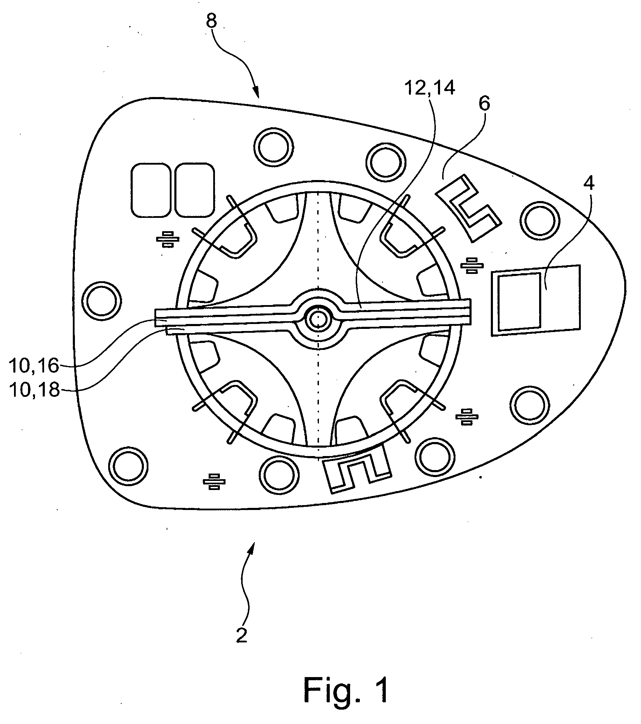

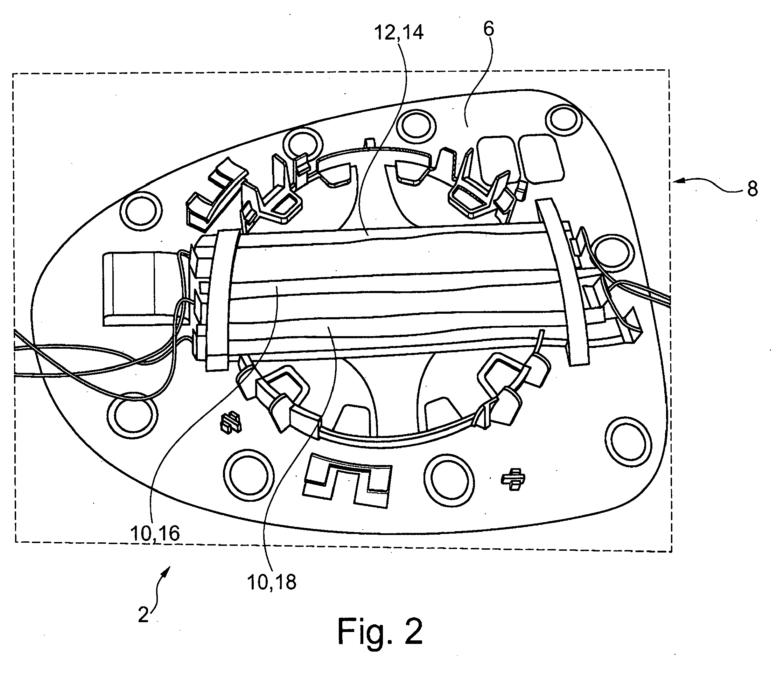

Die Figuren 1 und 2 zeigen Ausführungsbeispiele der insgesamt mit dem Bezugszeichen 2 versehenen Elektronikeinrichtung für eine Rückblickeinrichtung eines Kraftfahrzeugs. Die Elektronikeinrichtung 2 umfasst mindestens eine Verbraucherträgereinheit (in den Figuren nicht dargestellt) die an einer Aufnahme 4 einer Trägerplatte 6 eines Trägermoduls 8 angeordnet ist. An der Verbraucherträgereinheit ist ein elektrischer Verbraucher 20 festlegbar (in den Figuren 1 und 2 nicht dargestellt) der über mindestens ein Anschlussmittel 10 mit einer Spannungsquelle verbindbar ist. Um die Spannung beziehungsweise die Stromstärke am elektrischen Verbraucher einzustellen umfasst die Elektronikeinrichtung 2 ein elektrisches Widerstandsmittel 12. Bei den in den Figuren 1 und 2 dargestellten Ausführungsbeispielen umfasst das Widerstandsmittel 12 eine Mehrzahl an Kohlenstoffnanoröhrchen 14.

Bei den in den Figuren 1 und 2 gezeigten Ausführungsbeispielen umfasst das Anschlussmittel 10 bereichsweise das Widerstandsmittel 12.

Figur 1 zeigt ein erstes Ausführungsbeispiel der Elektronikeinrichtung 2 bei der das Widerstandsmittel 12 auf einer der Verbraucherträgereinheit abgewandten Seite der Aufnahme 4 angeordnet ist. Bei die den in den Figuren 1 und 2 gezeigten Ausführungsbeispielen umfasst das Anschlussmittel 10 einen Plus-Anschluss 16 und einen Minus-Anschluss 18, die im Wesentlichen parallel zueinander erstreckt verlaufend angeordnet sind.

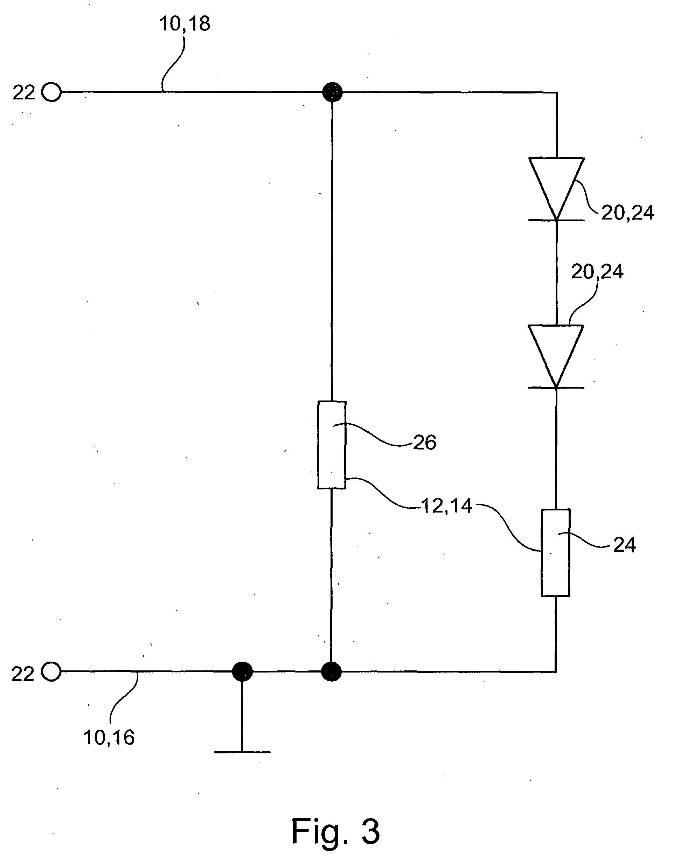

Figur 3 zeigt ein elektrisches Ersatzschaltbild des Trägermoduls 8 mit einer Elektronikeinrichtung 2. Hierbei ist ein elektrischer Verbraucher 20, der in dem elektrischen Ersatzschaltbild nach Figur 3 zwei LEDs 22 umfasst, durch einen Minus-Anschluss 18 des Anschlussmittels 10 und einem Plus-Anschluss 16 des Anschlussmittels 10 mit einer Spannungsquelle 22 verbunden. Das Widerstandsmittel 20 umfasst ein erstes Widerstandselement 24, das mit dem elektrischen Verbraucher 20 in Reihe geschaltet ist und ein zweites Widerstandselement 26, das mit dem elektrischen Verbraucher 20 parallel geschaltet ist.

Die in der vorstehenden Beschreibung, in den Ansprüchen, sowie in den Zeichnungen gezeigten Merkmale der Erfindung können sowohl einzeln, als auch in jeder beliebigen Kombination in der Verwirklichung der Erfindung und ihren verschiedenen Ausführungsformen wesentlich sein.

### Bezugszeichenliste

- 2: Elektronikeinrichtung
- 4: Aufnahme
- 6: Trägerplatte
- 8: Trägermodul
- 10: Anschlussmittel
- 12: Widerstandsmittel
- 14: Kohlenstoffnanoröhre
- 16: Plus-Anschluss
- 18: Minus-Anschluss
- 20: elektrischer Verbraucher
- 22: Spannungsquelle
- 24: erstes Widerstandselement
- 26: zweites Widerstandselement

## Patentansprüche

1. Elektronikeinrichtung (2) für eine Rückblickvorrichtung eines Kraftfahrzeugs, mit mindestens einer Verbraucherträgereinheit, die an einer Aufnahme (4) einer Trägerplatte (6) eines Trägermoduls (8) anordenbar oder angeordnet ist, mit mindestens einem an der Verbraucherträgereinheit festlegbaren oder festgelegten elektrischen Verbraucher (20), mit mindestens einem Anschlussmittel (10), durch das die Verbraucherträgereinheit mit einer Spannungsquelle (22) verbindbar oder verbunden ist und mit mindestens einem elektrischen Widerstandsmittel (12), durch das eine Spannung und/oder Stromstärke am elektrischen Verbraucher (20) einstellbar ist, **dadurch gekennzeichnet, dass** das Widerstandsmittel (12) eine Mehrzahl an Kohlenstoffnanoröhren (14) umfasst, sowie dass das Anschlussmittel (10) zumindest bereichsweise das Widerstandsmittel (12) umfasst.

2. Elektronikeinrichtung (2) nach Anspruch 1, **dadurch gekennzeichnet, dass** das mindestens eine Anschlussmittel (10) zumindest abschnittsweise eine Mehrzahl an Kohlenstoffnanoröhren (14) umfasst.

3. Elektronikeinrichtung (2) nach Anspruch 1 oder 2, **dadurch gekennzeichnet, dass** das mindestens eine Widerstandsmittel (12) zur Verbraucherträgereinheit beabstandet ist, insbesondere dass das mindestens eine Widerstandsmittel (12) auf einer der Verbraucherträgereinheit abgewandten Seite der Aufnahme (4) der Trägerplatte (6) anordenbar oder angeordnet ist.

4. Elektronikeinrichtung (2) nach mindestens einem der vorhergehenden Ansprüche, **dadurch gekennzeichnet, dass** das Widerstandsmittel (12) und/oder das Anschlussmittel (10) bandförmig ausgebildet ist bzw. sind und insbesondere eine Breite zwischen 1 mm und 50 mm, insbesondere 5 mm und 50 mm, insbesondere zwischen 10 mm und 40 mm, insbesondere zwischen 15 mm und 30 mm, umfasst und/oder dass das Widerstandsmittel (12) und/oder das Anschlussmittel (10) eine Höhe von 0,1 mm und 5 mm aufweisen.

5. Elektronikeinrichtung (2) nach mindestens einem der vorhergehenden Ansprüche, **dadurch gekennzeichnet, dass** das Widerstandsmittel (12) und/oder das Anschlussmittel (10) eine Beschichtung der Trägerplatte (6) des Trägermoduls (8) bilden, insbesondere auf die Trägerplatte (6) des Trägermoduls (8) aufspritzbar, insbesondere durch ein 2-Komponentenverfahren, aufklebbar aufgesprühbar und/oder aufstreichbar ist bzw. sind.

6. Elektronikeinrichtung (2) nach mindestens einem der vorhergehenden Ansprüche, **dadurch gekennzeichnet, dass** das Widerstandsmittel (12) einen Widerstandswert zwischen 50 Ohm und 600 Ohm, insbesondere zwischen 50 Ohm und 500 Ohm, insbesondere zwischen 50 Ohm und 400 Ohm, insbesondere zwischen 50 Ohm und 300 Ohm, insbesondere zwischen 50 Ohm und 200 Ohm umfasst.

7. Elektronikeinrichtung (2) nach mindestens einem der vorhergehenden Ansprüche, **dadurch gekennzeichnet, dass** der mindestens eine elektrische Verbraucher (20) ein Leuchtmittel, insbesondere LED oder OLED, und/oder ein Sensormittel umfasst.

8. Elektronikeinrichtung (2) nach mindestens einem der vorhergehenden Ansprüche, **dadurch gekennzeichnet, dass** das Widerstandsmittel (12) ein erstes Widerstandselement (24) umfasst, das mit dem elektrischen Verbraucher (20) in Reihe schaltbar oder geschaltet ist, und/oder dass das Widerstandsmittel (12) ein zweites Widerstandselement (26) umfasst, dass mit dem elektrischen Verbraucher (20) parallel schaltbar oder geschaltet ist.

9. Elektronikeinrichtung (2) nach mindestens einem der vorhergehenden Ansprüche, mit mindestens einer der Verbraucherträgereinheit und/oder dem elektrischen Verbraucher (20) funktional zugeordneten elektromagnetischen Schutzkomponente.

10. Elektronikeinrichtung (2) nach mindestens einem der vorhergehenden Ansprüche, **dadurch gekennzeichnet, dass** das Anschlussmittel (10) mindestens einen Plus-Anschluss (16) und mindestens einen Minus-Anschluss (18) umfasst.

11. Elektronikeinrichtung (2) nach Anspruch 10, **dadurch gekennzeichnet, dass** der Plus-Anschluss (16) und der Minus-Anschluss (18) im wesentlichen parallel zueinander erstreckt verlaufend angeordnet sind.

12. Trägermodul (8) für eine Rückblickvorrichtung eines Kraftfahrzeugs mit mindestens einer Trägerplatte (6), mit mindestens einer Aufnahme (4) und mit mindestens einer Elektronikeinrichtung (2) nach einem der Ansprüche 1 bis 11.

13. Trägermodul (8) nach Anspruch 12, **dadurch gekennzeichnet, dass** die Trägerplatte (6) mindestens eine Vertiefung umfasst, in der das mindestens eine Widerstandsmittel (12) und/oder das mindestens eine Anschlussmittel (10) anordenbar oder angeordnet ist.

14. Trägermodul (8) nach Anspruch 12 oder 13, **dadurch gekennzeichnet, dass** die Trägerplatte (6) und die Aufnahme (4) ein einstückiges Bauteil umfassen und/oder dass die Aufnahme (4) eine gehäuseartige Vertiefung in der Trägerplatte (6) umfasst.

15. Rückblickvorrichtung eines Kraftfahrzeugs mit mindestens einem Trägermodul (8)nach einem der Ansprüche 12 bis 14, und/oder mit mindestens einer Elektronikeinrichtung (2) nach mindestens einem der vorhergehenden Ansprüche 1 bis 11.

## Claims

1. An electronic device (2) for a rear view device of a motor vehicle, having at least one consumer support unit which is or can be arranged on a receptacle (4) of a support plate (6) of a support module (8), having at least one electrical consumer (20) which is or can be fixed to the consumer support unit, having at least one connecting terminal (10) by means of which the consumer support unit is or can be connected to a voltage source (22), and having at least one electric resistive means (12) by means of which a voltage and/or current intensity can be adjusted at the electric consumer (20), **characterized in that** the resistive means (12) comprises a plurality of carbon nanotubes (14), as well as that the connecting terminal (10) comprises the resistive means (12) at least area by area.

2. The electronic device (2) according to Claim 1, **characterized in that** the at least one connecting terminal (10) comprises a plurality of carbon nanotubes (14) at least section by section.

3. The electronic device (2) according to Claim 1 or 2, **characterized in that** the at least one resistive means (12) is located at a distance from the consumer support unit, in particular that the at least one resistive means (12) is or can be arranged on a side of the receptacle (4) of the support plate (6) facing away from the consumer support unit.

4. The electronic device (2) according to at least one of the preceding claims, **characterized in that** the resistive means (12) and/or the connecting terminal (10) has/have a ribbonlike form and comprise(s) in particular a width between 1 mm and 50 mm, in particular 5 mm and 50 mm, in particular between 10 mm and 40 mm, in particular between 15 mm and 30 mm, and/or that the resistive means (12) and/or the connecting terminal (10) having a height of 0.1 mm and 5 mm.

5. The electronic device (2) according to at least one of the preceding claims, **characterized in that** the resistive means (12) and/or the terminal form(s) a coating of the support plate (6) of the support module (8), which can be sprayed in particular onto the support plate (6) of the support module (8), which can be glued, sprayed and/or spread on in particular by means of a 2-component process.

6. The electronic device (2) according to at least one of the preceding claims, **characterized in that** the resistive means (12) comprises a resistance value between 50 ohms and 600 ohms, in particular between 50 ohms and 500 ohms, in particular between 50 ohms and 400 ohms, in particular between 50 ohms and 300 ohms, in particular between 50 ohms and 200 ohms.

7. The electronic device (2) according to at least one of the preceding claims, **characterized in that** the at least one electric consumer (20) comprises a lamp, in particular an LED or OLED and/or a sensor means.

8. The electronic device (2) according to at least one of the preceding claims, **characterized in that** the resistive means (12) comprises a first resistive element (24), which is or can be connected in series with the electric consumer (20), and/or that the resistive means (12) comprises a second resistive element (26) which is or can be connected in parallel with the electric consumer (20).

9. The electronic device (2) according to at least one of the preceding claims, having at least one electromagnetic protection component which is functionally assigned to the consumer support unit and/or the electric consumer (20).

10. The electronic device (2) according to at least one of the preceding claims, **characterized in that** the connecting terminal (10) comprises at least one plus terminal (16) and at least one minus terminal (18).

11. The electronic device (2) according to Claim 10, **characterized in that** the plus terminal (16) and the minus terminal (18) are arranged so that they extend substantially parallel to one another.

12. The support module (8) for a rear view device of a motor vehicle having at least one support plate (6), having at least one receptacle (4) and having at least one electronic device (2) according to any one of Claims 1 to 11.

13. The support module (8) according to Claim 12, **characterized in that** the support plate (6) comprises at least one cavity in which the at least one resistive means (12) and/or the at least one connecting terminal (10) is or can be arranged.

14. The support module (8) according to Claim 12 or 13, **characterized in that** the support plate (6) and the receptacle (4) comprise a single-piece component and/or that the receptacle (4) comprises a housing-like cavity in the support plate (6).

15. The rear view device of a motor vehicle having at least one support module (8) according to any one of Claims 12 to 14, and/or having at least one electronic device (2) according to at least one of the preceding Claims 1 to 11.

## Revendications

1. Dispositif électronique (2) pour une unité de rétroviseur d'un véhicule automobile, ayant au moins une unité de support de consommateur qui peut être ou qui est agencée au niveau d'une ouverture (4) d'une plaque de support (6) d'un module de support (8), ayant au moins un consommateur électrique (20) qui peut être ou qui est fixé sur l'unité de support de consommateur, ayant au moins un moyen de connexion (10) à l'aide duquel l'unité de support de consommateur peut être ou est reliée à une source de tension (22), et ayant au moins un moyen de résistance électrique (12) par l'intermédiaire duquel une tension et/ou une intensité au niveau du consommateur électrique (20) est réglable, **caractérisé en ce que** le moyen de résistance (12) comprend une pluralité de nanotubes de carbone (14), de même que le moyen de connexion (10) comprend au moins par endroits le moyen de résistance électrique (12).

2. Dispositif électronique (2) selon la revendication 1, **caractérisé en ce que** le au moins un moyen de connexion (10) comprend, au moins par sections, une pluralité de nanotubes de carbone (14).

3. Dispositif électronique (2) selon la revendication 1 ou 2, **caractérisé en ce que** le au moins un moyen de résistance (12) est espacé de l'unité de support de consommateur, en particulier de sorte que le au moins un moyen de résistance (12) peut être ou est agencé sur un côté opposé à l'unité de support de consommateur de l'ouverture (4) de la plaque de support (6).

4. Dispositif électronique (2) selon au moins l'une des revendications précédentes, **caractérisé en ce que** le moyen de résistance (12) et/ou le moyen de connexion (10) est ou sont conçus en forme de bande, et comprenant en particulier une largeur comprise entre 1 mm et 50 mm, en particulier 5 mm et 50 mm, en particulier entre 10 mm et 40 mm, en particulier entre 15 mm et 30 mm, et/ou **en ce que** le moyen de résistance (12) et/ou le moyen de connexion (10) ont une hauteur comprise entre 0,1 mm et 5 mm.

5. Dispositif électronique (2) selon au moins l'une des revendications précédentes, **caractérisé en ce que** le moyen de résistance (12) et/ou le moyen de connexion (10) constituent un revêtement de la plaque de support (6) du module de support (8), pouvant être appliqué en revêtement en particulier sur la plaque de support (6) du module de support (8), pouvant être appliqué de manière adhésive, pulvérisé et/ou à la brosse en particulier par un procédé à deux composants.

6. Dispositif électronique (2) selon au moins l'une des revendications précédentes, **caractérisé en ce que** les moyens de résistance (12) comprennent une valeur de résistance comprise entre 50 ohms et 600 ohms, en particulier entre 50 ohms et 500 ohms, en particulier entre 50 ohms et 400 ohms, en particulier entre 50 ohms et 300 ohms, en particulier entre 50 ohms et 200 ohms.

7. Dispositif électronique (2) selon au moins l'une des revendications précédentes, **caractérisé en ce que** le au moins un consommateur électrique (20) comprend un moyen d'éclairage, en particulier LED ou OLED, et/ou un moyen de détection.

8. Dispositif électronique (2) selon au moins l'une des revendications précédentes, **caractérisé en ce que** le moyen de résistance (12) comprend un premier élément de résistance (24) qui peut être ou qui est couplé en série avec le consommateur électrique (20), et/ou **en ce que** le moyen de résistance (12) comprend un seconds élément de résistance (26) qui peut être ou qui est couplé en parallèle avec le consommateur électrique (20).

9. Dispositif électronique (2) selon au moins l'une des revendications précédentes, ayant au moins un composant de protection électromagnétique associé fonctionnellement à l'unité de support de consommateur et/ou au consommateur électrique (20).

10. Dispositif électronique (2) selon au moins l'une des revendications précédentes, **caractérisé en ce que** le moyen de connexion (10) comprend au moins une borne positive (16) et au moins une borne négative (18).

11. Dispositif électronique (2) selon la revendication 10, **caractérisé en ce que** la borne positive (16) et la borne négative (18) sont agencées pour s'étendre sensiblement parallèlement l'une par rapport à l'autre.

12. Module de support (8) pour une unité de rétroviseur d'un véhicule automobile ayant au moins une plaque de support (6), ayant au moins une ouverture (4) et ayant au moins un dispositif électronique (2) selon l'une quelconque des revendications 1 à 11

13. Module de support (8) selon la revendication 12, **caractérisé en ce que** la plaque de support (6) comprend au moins un évidement dans lequel le au moins un moyen de résistance (12) et/ou le au moins un moyen de connexion (10) est ou peut être agencé.

14. Module de support (8) selon la revendication 12 ou 13, **caractérisé en ce que** la plaque de support (6) et l'ouverture (4) comprennent un composant d'une seule pièce, et/ou **en ce que** l'ouverture (4) comprend un évidement en forme de boîtier dans la plaque de support (6).

15. Unité de rétroviseur d'un véhicule automobile ayant au moins un module de support (8), selon l'une des revendications 12 à 14, et /ou ayant au moins un dispositif électronique (2) selon au moins l'une des revendications précédentes 1 à 11.
